# FASCICULE DE BREVET EUROPEEN

(11) **EP 0 744 316 B1**
(45) Date de publication et mention de la délivrance du brevet: **29.12.1999**
(21) Numéro de dépôt: 96420173.5
(22) Date de dépôt: 14.05.1996
(51) Int. Cl.: B60N 2/48

(54) **Dispositif de verrouillage d'une tige crantée**
Verriegelungsvorrichtung für eine Zahnstange
Latch mechanism for a toothed rod

(30) Priorité: 24.05.1995 FR 9506411
(43) Date de publication de la demande: 27.11.1996
(73) Titulaire: BOURBON AUTOMOBILE, F-39170 Saint Lupicin (FR)
(72) Inventeur: Scherrer, Bernard, 39170 Saint Lupicin (FR)
(74) Mandataire: Maureau, Philippe

(56) Documents cités:
- EP-A- 0 165 593
- DE-A- 3 301 073
- DE-A- 3 437 803
- DE-C- 314 443
- DE-U- 8 620 793
- DE-U- 9 404 697
- FR-A- 2 671 587
- US-A- 3 544 162
- US-A- 4 589 698

## Description

La présente invention concerne un dispositif de verrouillage d'une tige crantée. Ce dispositif peut notamment être solidaire d'un siège d'automobile et cette tige crantée être solidaire d'un appui-tête, le dispositif servant à immobiliser la tige selon plusieurs positions verticales et donc à régler la hauteur de l'appui-tête.

Un dispositif de ce type comprend généralement une portion inférieure tubulaire, de guidage de la tige, et une portion supérieure élargie, délimitant un logement ouvert latéralement. Ce logement contient un ensemble de verrouillage de la tige.

Dans l'un des dispositifs connus, cet ensemble de verrouillage comprend un poussoir et une lame élastique métallique. Ce poussoir coulisse dans le logement radialement par rapport à la tige crantée et agit sur cette lame. Une portion de la lame élastique se trouve normalement située en travers de l'alésage du dispositif, et vient en prise avec la tige crantée. Lorsque le poussoir est enfoncé dans le logement, il déforme la lame élastique jusqu'à l'effacer au-delà de l'alésage, ce qui permet le libre coulissement de la tige. Dès que la pression sur le poussoir est relâchée, la lame retrouve sa forme d'origine par élasticité et verrouille à nouveau la tige.

Le poussoir est retenu dans le logement par encliquetage de dents latérales qu'il comprend, faisant corps avec lui-même, derrière des décrochements aménagés dans les parois délimitant latéralement le logement.

Dans un deuxième type de dispositif, décrit par la demande de brevet européen n° 0 165 593, l'ensemble de verrouillage comprend un poussoir muni d'une boucle centrale métallique et de deux lames latérales élastiques, ces lames étant en matière synthétique et moulées en une seule pièce avec le poussoir. La boucle centrale vient en prise avec la tige crantée, et les deux lames latérales viennent porter contre deux parois obliques du logement lors de l'enfoncement du poussoir, ce qui les déforme. Lorsque la pression sur le poussoir est relâchée, ces deux lames retrouvent leur forme d'origine par élasticité et rappellent le poussoir en position de verrouillage.

Ce dernier est également retenu dans le logement par encliquetage de dents faisant corps avec lui-même.

Dans un cas comme dans l'autre, le corps du dispositif et le poussoir sont réalisés en matière plastique. Les tolérances de fabrication de ces pièces rendent le verrouillage des poussoirs dans les logements relativement incertain, les dents d'encliquetage pouvant ne pas être parfaitement en prise avec les décrochements du logement. En cas d'encliquetage imparfait, les arêtes des dents ou des décrochements peuvent s'émousser après plusieurs manipulations, rendant possible un échappement du poussoir hors du logement. En outre, ces dents peuvent être plus ou moins détériorées lors de la mise en place de l'ensemble de verrouillage dans le logement.

De plus, avec les dispositifs existants, un démontage du poussoir n'est pas rendu impossible. Ce démontage induit un risque de rupture de l'une ou l'autre des pièces du dispositif, et, s'il est réalisé, conduit à une détérioration définitive des arêtes des dents d'encliquetage ou des décrochements, et donc à une rétention ultérieure imparfaite du poussoir dans son logement. En particulier, dans le dispositif décrit par la demande de brevet européen précitée, le poussoir ne comprend qu'une seule dent d'encliquetage située au niveau de sa partie centrale, et non pas deux dents d'encliquetage latérales, du fait de la présence des lames élastiques précitées et de la conformation du boîtier. Un démontage paraît donc relativement facile à réaliser.

Les dispositifs existants ont également pour inconvénient d'être relativement complexes à fabriquer et à assembler, compte tenu de la structure des ensembles de verrouillage qu'ils comprennent.

Par ailleurs, un véhicule peut subir des variations de température très importantes, selon l'utilisation qui en est faite. Les lames en matière synthétique décrites par la demande de brevet européen n° 0 165 593 ne donnent pas satisfaction, car elles risquent de devenir cassantes en cas de températures très basses ou de perdre leur élasticité en cas de températures élevées. Dans un cas comme dans l'autre, il en résulte un risque de détérioration du dispositif ou de mauvais verrouillage de l'appui-tête.

Le document DE-U-9404697 décrit un dispositif de verrouillage d'une tige crantée, comprenant
- une portion inférieure tubulaire, de guidage de la tige, et une portion supérieure élargie, délimitant un logement ouvert latéralement ;
- un ensemble de verrouillage de la tige, contenu dans ledit logement, ledit ensemble de verrouillage incluant un poussoir muni de dents latérales d'encliquetage venant se verrouiller derrière des décrochements aménagés dans les parois qui délimitent latéralement le logement ; ledit poussoir pouvant coulisser dans le logement radialement par rapport à la tige crantée entre une position de non enfoncement dans le logement, dans laquelle une partie qu'il comprend est normalement située en travers de l'alésage du dispositif, et vient en prise avec la tige crantée, et une position enfoncée dans le logement, dans laquelle ladite partie du poussoir est effacée au-delà de l'alésage, ce qui permet le libre coulissement de la tige ; le poussoir étant muni de deux pattes latérales faisant saillie parallèlement à son axe de déplacement, ces pattes comportant les dents d'encliquetage sur leur face extérieure et présentant une certaine souplesse perpendiculairement audit axe de déplacement ; l'ensemble de verrouillage comprenant également deux lames élastiques.

Le dispositif selon ce document ne permet pas de remédier à l'ensemble des inconvénients précités.

La présente invention vise à parvenir à ce but, en fournissant un dispositif de verrouillage d'une tige crantée, qui assure une parfaite rétention du poussoir dans son logement, qui soit quasiment indémontable, qui soit simple à réaliser et à assembler, et qui reste parfaitement fonctionnel quelle que soit la température du véhicule.

Ce dispositif comprend les caractéristiques exposées ci-dessus, connues par le document DE-U-9404697.

Selon l'invention, au moins dans la position de non enforcement du poussoir, les deux lames élastiques de l'ensemble de verrouillage viennent porter contre les faces internes desdites pattes, de manière à presser légèrement ces dernières vers l'extérieur et à assurer leur verrouillage derrière les décrochements.

Ainsi, grâce à ces pattes déformables et à ces lames élastiques, le parfait maintien des dents d'encliquetage derrière les décrochements est assuré, quelles que soient les variations des dimensions du poussoir et du logement, dues aux tolérances de fabrication.

De plus, le démontage du poussoir est quasiment impossible à réaliser sans détruire le dispositif.

De préférence, les lames se prolongent au-delà des pattes latérales et le logement comprend deux parois obliques contre lesquelles ces lames viennent porter lors de l'enfoncement du poussoir.

Lorsque la pression sur le poussoir est relâchée, les lames retrouvent leur forme d'origine. Elles glissent alors le long desdites parois obliques et ramènent le poussoir en position de verrouillage.

Avantageusement, les lames sont métalliques, et donc peu sensibles aux variations de température. Le dispositif reste ainsi fonctionnel même en cas de températures très basses ou très élevées.

Selon une forme de réalisation préférée de l'invention, l'ensemble de verrouillage comprend une pièce métallique, dont les parties d'extrémité forment les lames précitées, et dont la partie centrale est conformée en U, les deux branches parallèles de ce U étant situées de part et d'autre de l'alésage recevant la tige tandis que la branche centrale est conformée et positionnée pour venir en prise avec la tige lorsque le poussoir est en position de verrouillage et pour être effacée au-delà de l'alésage lorsque le poussoir est enfoncé.

Le poussoir et la pièce métallique sont particulièrement simples à réaliser et faciles à assembler l'un à l'autre, par tout moyen de fixation approprié, tel que des pointes engagées en force à travers eux.

Pour sa bonne compréhension, l'invention est à nouveau décrite ci-dessous en référence au dessin schématique annexé représentant, à titre d'exemple non limitatif, une forme de réalisation préférée du dispositif de verrouillage qu'elle concerne.
La figure 1 en est une vue en perspective éclatée, avec coupe partielle ;
la figure 2 en est une vue de dessus, en coupe, au cours de son assemblage, et
les figures 3 et 4 en sont des vues similaires à la figure 2, respectivement en position de verrouillage et de déverrouillage de la tige.

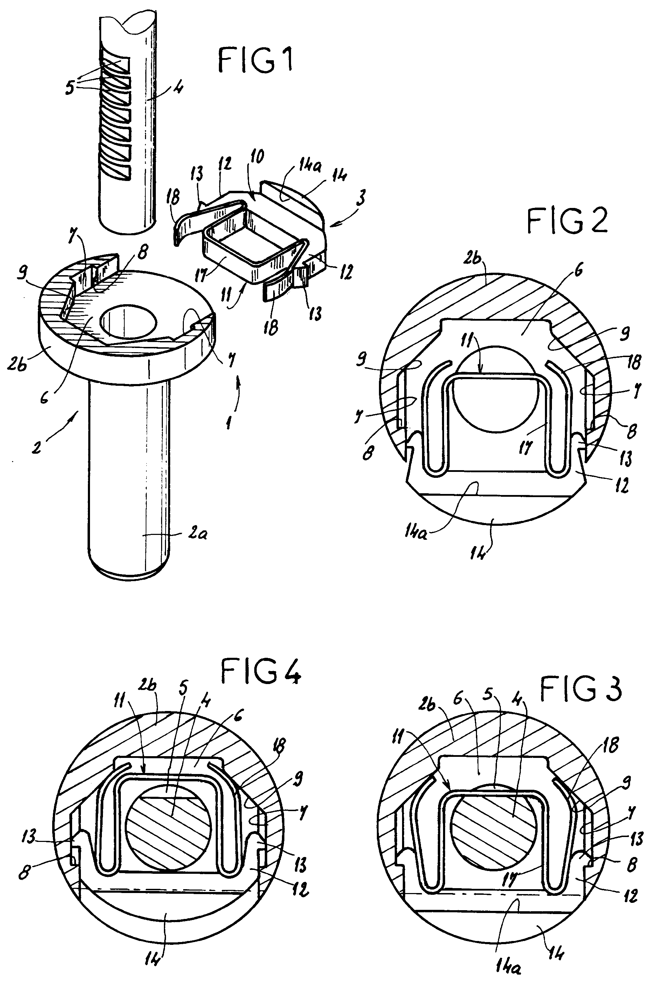

La figure 1 représente un dispositif 1, composé d'un corps 2 et d'un ensemble de verrouillage 3. Le dispositif permet le verrouillage d'une tige 4 comprenant des crans 5.

Le corps 2 comprend une portion inférieure tubulaire 2a, de guidage de la tige 4, et une portion supérieure élargie 2b, délimitant un logement 6 ouvert latéralement, destiné à recevoir, avec possibilité de coulissement, l'ensemble de verrouillage 3.

Sur la figure 1, la portion supérieure 2b a été coupée perpendiculairement à l'axe du dispositif. Cette portion 2b est fermée par une paroi supérieure, percée d'un trou coaxial à la portion 2a pour le passage de la tige 4.

Il apparaît sur les figures que les parois de la portion 2b délimitant latéralement le logement 6 comprennent deux évidements latéraux 7 formant, du côté de l'ouverture d'introduction de l'ensemble 3, des décrochements 8. A l'opposé de ces décrochements 8, les évidements 7 sont prolongés par deux parois obliques 9 qui convergent l'une en direction de l'autre du côté du fond du logement 6.

L'ensemble 3 est formé d'un élément en matière synthétique 10, constituant un poussoir d'actionnement manuel de l'ensemble 3, et d'une pièce métallique 11.

Le poussoir 10 comprend deux pattes latérales 12 faisant saillie parallèlement à l'axe de déplacement de cet ensemble 3. Les pattes 12 comportent des dents d'encliquetage 13 sur leur face extérieure, et présentent une certaine souplesse perpendiculairement à l'axe de déplacement de l'ensemble 3. Les dents 13 sont conformées pour venir prendre appui derrière les décrochements 8.

Le poussoir 10 comprend également une nervure 14 faisant saillie vers le haut, qui présente une face plane 14a perpendiculaire à l'axe de coulissement de l'ensemble 3. Cette face est destinée à venir en appui contre le bord de la portion 2b délimitant la partie supérieure de l'ouverture du logement 6, ce bord étant rectiligne et constituant une butée de limitation de l'enfoncement de l'ensemble 3 dans le logement 6.

La pièce métallique 11 comprend une partie centrale 17 conformée en U. Les deux branches parallèles de cette partie 17 sont situées de part et d'autre de l'alésage recevant la tige 4. La branche centrale est conformée et est positionnée de manière à pouvoir occuper les deux positions par rapport à la tige 4, représentées aux figures 3 et 4. Dans la position de verrouillage montrée à la figure 3, elle se trouve en travers de l'alésage et vient en prise avec la tige crantée 4, tandis que, dans la position de déverrouillage montrée à la figure 4, elle se trouve effacée au-delà de cet alésage et permet le libre coulissement de la tige 4.

La pièce métallique 11 comprend en outre deux lames élastiques latérales 18, dont les parties inférieures viennent porter contre les faces internes des pattes latérales 12, et dont les extrémités sont recourbées et destinées à venir porter contre les parois 9.

Le poussoir 10 et la pièce 11 sont assemblés l'un à l'autre par tout moyen de fixation approprié, tel que des pointes engagées en force à travers la base des pattes 12 et des lames 18.

La figure 2 montre l'assemblage du dispositif 1, c'est-à-dire l'introduction de l'ensemble 3 dans le logement 6. Il apparaît que, lors de cette introduction, les pattes 12 et les lames 18 se déforment élastiquement vers l'intérieur, jusqu'à ce que les dents 13 aient franchi les décrochements 8. Le poussoir 10 et la pièce 11 retrouvent alors leur forme naturelle, ce qui verrouille les dents 13 derrière les décrochements 8, et, donc, l'ensemble 3 dans le logement 6.

Dans la position de verrouillage, l'extrémité recourbée des pattes 18 porte contre les parois 9. L'orientation de ces parois et l'élasticité des pattes 18 maintiennent normalement l'ensemble 3 dans cette position. En outre, les deux lames élastiques 18 viennent porter contre les faces internes des pattes 12, de manière à presser légèrement ces pattes 12 vers l'extérieur par rapport au poussoir 10, et à assurer le maintien des dents d'encliquetage 13 derrière les décrochements 8, quelles que soient les variations des dimensions du poussoir 10 et du logement 6, dues aux tolérances de fabrication.

De plus, le démontage du poussoir 10 est extrêmement difficile à réaliser.

En position de déverrouillage, les extrémités des lames 18 glissent le long des parois 9, et se déforment vers l'intérieur du logement 6, sans toutefois entraîner les pattes 12 avec elles.

Lorsque la pression sur le poussoir 10 est relâchée, les lames 18 retrouvent leur forme d'origine. Elles glissent alors le long des parois obliques 9 et ramènent l'ensemble 3 en position de verrouillage.

Il va de soi que l'invention n'est pas limitée à la forme de réalisation décrite ci-dessus à titre d'exemple mais qu'elle en embrasse, au contraire, toutes les variantes de réalisation. Ainsi, l'ensemble 3 pourrait comprendre uniquement deux lames latérales 18, et une partie centrale non solidaire de ces lames mais, par exemple, venue de moulage avec le poussoir 10.

## Revendications

1. Dispositif de verrouillage d'une tige crantée, comprenant
- une portion inférieure tubulaire (2a), de guidage de la tige (4), et une portion supérieure élargie (2b), délimitant un logement (6) ouvert latéralement ;
- un ensemble (3) de verrouillage de la tige (4), contenu dans ledit logement (6), ledit ensemble (3) de verrouillage incluant un poussoir (14) muni de dents latérales d'encliquetage (13) venant se verrouiller derrière des décrochements (8) aménagés dans les parois qui délimitent latéralement le logement (6) ; ledit poussoir (14) pouvant coulisser dans le logement (6) radialement par rapport à la tige crantée (4) entre une position de non enfoncement dans le logement (6), dans laquelle une partie (11) qu'il comprend est normalement située en travers de l'alésage du dispositif (2), et vient en prise avec la tige crantée (4), et une position enfoncée dans le logement (6), dans laquelle ladite partie (11) du poussoir (14) est effacée au-delà de l'alésage, ce qui permet le libre coulissement de la tige (4) ; le poussoir (10) étant muni de deux pattes latérales (12) faisant saillie parallèlement à son axe de déplacement, ces pattes (12) comportant les dents d'encliquetage (13) sur leur face extérieure et présentant une certaine souplesse perpendiculairement audit axe de déplacement ; l'ensemble (3) de verrouillage comprenant également deux lames élastiques ;
dispositif (2) caractérisé en ce que, au moins dans la position de non enforcement du poussoir, les deux lames élastiques (18) de l'ensemble (3) de verrouillage viennent porter contre les faces internes desdites pattes (12), de manière à presser légèrement ces dernières vers l'extérieur et à assurer leur verrouillage derrière les décrochements (8).

2. Dispositif de verrouillage selon la revendication 1, caractérisé en ce que les lames (18) se prolongent au-delà des pattes latérales (12) et en ce que le logement (6) comprend deux parois obliques (9) contre lesquelles ces lames (18) viennent porter lors de l'enfoncement du poussoir (10).

3. Dispositif de verrouillage selon la revendication 1 ou la revendication 2, caractérisé en ce que les lames (18) sont métalliques.

4. Dispositif de verrouillage selon l'une des revendications 1 à 3, caractérisé en ce que l'ensemble de verrouillage (3) comprend une pièce métallique (11), dont les parties d'extrémité forment les lames (18) précitées, et dont la partie centrale (17) est conformée en U, les deux branches parallèles de ce U étant situées de part et d'autre de l'alésage recevant la tige (4) tandis que la branche centrale est conformée et positionnée pour venir en prise avec la tige (4) lorsque le poussoir (10) est en position de verrouillage, et pour être effacée au-delà de l'alésage lorsque le poussoir (10) est enfoncé.

5. Dispositif de verrouillage selon l'une des revendications 1 à 4, caractérisé en ce que le poussoir (10) comprend une nervure (14) faisant saillie vers le haut, qui présente une face plane (14a) perpendiculaire à l'axe de coulissement de l'ensemble (3), cette face (14a) étant destinée à venir en appui contre le bord de la portion (2b) du dispositif (1) délimitant la partie supérieure de l'ouverture du logement (6).

## Claims

1. Device for locking a notched rod, comprising
- a lower tubular portion (2a) for guiding the rod (4), and a broadened upper portion (2b) delimiting a laterally open receptacle (6);
- an assembly (3), contained in the said receptacle (6), for locking the rod (4), the said locking assembly (3) including a pusher (14 [sic]) provided with lateral catching teeth (13) which latch behind recesses (8) made in the walls laterally delimiting the receptacle (6); the said pusher (14 [sic]) being able to slide in the receptacle (6) radially with respect to the notched rod (4) between a position in which it is not pushed into the receptacle (6), in which position a part (11) which it comprises is normally situated across the bore of the device (2) and engages with the notched rod (4), and a position in which it is pushed into the receptacle (6), in which position the said part (11) of the pusher (14 [sic]) is moved away beyond the bore, thus allowing the rod (4) to slide freely; the pusher (10) being provided with lateral lugs (12) projecting parallel to its axis of displacement, these lugs (12) having the catching teeth (13) on their outer face and possessing a certain flexibility perpendicularly to the said axis of displacement; the locking assembly (3) also comprising two resilient strips;
the device (2) being characterized in that, at least in the position in which the pusher is not pushed in, the two resilient strips (18) of the locking assembly (3) bear against the inner faces of the said lugs (12) so as to press the latter slightly outwards and ensure their latching behind the recesses (8).

2. Locking device according to Claim 1, characterized in that the strips (18) extend beyond the lateral lugs (12) and in that the receptacle (6) comprises two oblique walls (9), against which these strips (18) bear as the pusher (10) is being pushed in.

3. Locking device according to Claim 1 or Claim 2, characterized in that the strips (18) are metal.

4. Locking device according to one of Claims 1 to 3, characterized in that the locking assembly (3) comprises a metal piece (11), the end parts of which form the above-mentioned strips (18) and the central part (17) of which is U-shaped, the two parallel sections of this U being situated on either side of the bore receiving the rod (4) while the central section is shaped and positioned to engage with the rod (4) when the pusher (10) is in the locking position and to be moved away beyond the bore when the pusher (10) is pushed in.

5. Locking device according to one of Claims 1 to 4, characterized in that the pusher (10) comprises an upwardly projecting rib (14) which possesses a plane face (14a) perpendicular to the sliding axis of the assembly (3), this face (14a) being intended to rest against the edge of the portion (2b) of the device (1) delimiting the upper part of the opening of the receptacle (6).

## Patentansprüche

1. Verriegelungsvorrichtung für eine Einraststange, mit:
- einem unteren rohrförmigen Abschnitt (2a) zur Führung der Stange (4) und einem oberen erweiterten Abschnitt (2b), der einen seitlich offenen Sitz (6) begrenzt;
- einer in dem Sitz (6) enthaltenen Einheit (3) zur Verriegelung der Stange (4), wobei die Verriegelungseinheit (3) einen Drücker (14) enthält, der mit seitlichen Einrastzähnen (13) ausgestattet ist, die sich hinter Hakenabsätzen (8) verriegeln, welche in den Wänden eingearbeitet sind, die den Sitz (6) seitlich begrenzen; wobei der Drücker (14) in dem Sitz (6) radial bezüglich der Einraststange (4) gleiten kann zwischen einer in dem Sitz (6) nicht versenkten Stellung, bei welcher ein Teil (11), den er aufweist, normalerweise durch die Bohrung der Vorrichtung verlaufend angeordnet ist und mit der Einraststange (4) in Eingriff kommt, und einer in dem Sitz (6) versenkten Stellung, bei welcher der Teil (11) des Drückers (14) aus der Bohrung herausgeführt wird, wodurch ein freies Gleiten der Stange (4) ermöglicht wird; wobei der Drücker (10) mit zwei seitlichen Schenkeln (12) ausgestattet ist, welche parallel zu seiner Verschiebungsachse hervorstehen und welche die Einrastzähne (13) auf ihrer Außenseite aufweisen und eine gewisse Biegsamkeit senkrecht zu der Verschiebungsachse haben; wobei die Verriegelungseinheit (3) auch zwei elastische Blattfedern aufweist,
dadurch gekennzeichnet, daß bei der Vorrichtung (2) zumindest in der nicht versenkten Stellung des Drückers die beiden elastischen Blattfedern (18) der Verriegelungseinheit (3) an den Innenflächen der Schenkel (12) derart zum Anliegen kommen, daß diese leicht nach außen gedrückt werden und daß ihre Verriegelung hinter den Hakenabsätzen (8) gewährleistet wird.

2. Verriegelungsvorrichtung nach Anspruch 1, dadurch gekennzeichnet, daß die Blattfedern (18) über die seitlichen Schenkel (12) hinaus verlängert sind und daß der Sitz (6) zwei seitliche Wände (9) aufweist, an denen die Blattfedern (15) beim Versenken des Drückers (10) zum Anliegen kommen.

3. Verriegelungsvorrichtung nach Anspruch 1 oder 2, dadurch gekennzeichnet, daß die Blattfedern (18) aus Metall sind.

4. Verriegelungsvorrichtung nach einem der Ansprüche 1 bis 3, dadurch gekennzeichnet, daß die Verriegelungseinheit (3) ein Metallstück (11) aufweist, dessen Endteile die vorgenannten Blattfedern (18) bilden und dessen mittiger Teil (17) U-förmig ausgebildet ist, wobei die beiden parallelen Arme dieses U's beiderseits der die Stange (4) aufnehmenden Bohrung angeordnet sind, während der mittige Abschnitt derart geformt und angeordnet ist, daß er mit der Stange (4) in Eingriff gelangt, wenn der Drücker (10) in der Verriegelungsstellung ist, und daß er aus der Bohrung herausgebracht wird, wenn der Drücker (10) versenkt ist.

5. Verriegelungsvorrichtung nach einem der Ansprüche 1 bis 4, dadurch gekennzeichnet, daß der Drücker (10) eine nach oben vorstehende Rippe (14) aufweist, die eine ebene Fläche (14a) senkrecht zur Gleitachse der Einheit (3) hat, wobei diese Fläche (14a) dazu bestimmt ist, an dem Rand des Abschnitts (2b) der Vorrichtung (1) zum Anliegen zu kommen, der den oberen Teil der Öffnung des Sitzes (6) begrenzt.
